# EUROPEAN PATENT APPLICATION

(11) **EP 2 400 750 A1**
(43) Date of publication of application: **28.12.2011**
(21) Application number: 10743563.8
(22) Date of filing: 18.02.2010
(51) Int. Cl.: H04N 7/173, H04N 5/46

(54) **TELEVISION RECEIVER**

(30) Priority: 23.02.2009 JP 2009038886; 20.10.2009 JP 2009241160
(71) Applicant: Panasonic Corporation, Kadoma-shi Osaka 571-8501 (JP)
(72) Inventor: KOGA, Masashi, Osaka-shi, Osaka 540-6207 (JP); FUJIISHI, Shuji, Osaka-shi, Osaka 540-6207 (JP)
(74) Representative: Kügele, Bernhard
(86) International application number: PCT/JP2010/001028
(87) International publication number: WO 2010/095434

(57) **Abstract**

A television receiver includes a tuner switching unit for switching between a terrestrial tuner and a satellite tuner, a CI unit that is an interface of a CI card, a CI switching unit for switching whether or not a signal from the terrestrial tuner or the satellite tuner is output to the CI unit, a decoder unit for decrypting a signal from the CI switching unit and outputting a picture, and a control unit for controlling the tuner switching unit and the CI switching unit. When a signal input from the satellite tuner is out of the range of specifications of the inserted CI card, the control unit controls the CI switching unit so that the signal output by the satellite tuner is input into the decoder unit.

## Description

### TECHNICAL FIELD

The present invention relates to a television receiver compatible with a plurality of specifications, for example, European DVB-CI and CI+, for decrypting scrambled broadcast.

### BACKGROUND ART

European television receiving systems use DVB-CI (Digital Video Broadcasting-Common Interface) as a standard for descrambling encrypted pay broadcast so as to be viewed and listened to. A broadcast receiver has an interface called Common Interface (hereinafter, referred to as "CI") with respect to external equipment. To this interface, a CI card called CAM (Conditional Access Module), which is supplied by a broadcaster, is connected. In a broadcast receiving system, Transport Stream (hereinafter, referred to as "TS") received in digital broadcast is input into the CI card, the TS is descrambled in the CI card, and then the TS in which scramble has been cancelled is input into the broadcast receiver again. Thus, the television receiving system enables encrypted pay broadcast to be viewed and listened to.

DVB-CI is an interface format for giving a CI card to a television receiver, and connects the television receiver and the CI card to each other by using a PCMCIA (Personal Computer Memory Card International Association) interface. The CI card includes a descrambler and a CPU. The CPU of the television receiver transmits a PMT (CA-PMT (Program Map Table)) in which ES (Elementary Stream) information and CA (Conditional Access) descriptors are described to the CI card in a binary format, and thereby DVB-CI card carries out an operation of EMM (Entitlement Management Message) or ECM (Entitlement Control Message) to start cancelling the encryption automatically (see, for example, Patent Literature 1). Note here that the standard of DVB-CI is described in Non Patent Literature 1.

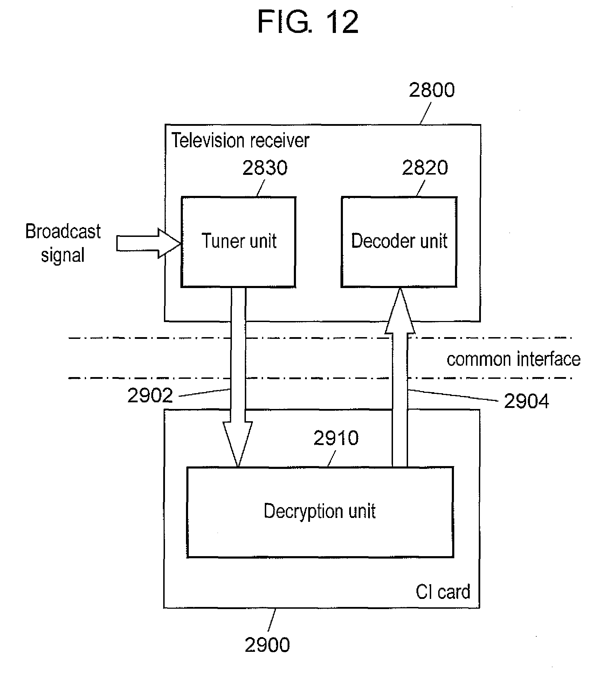

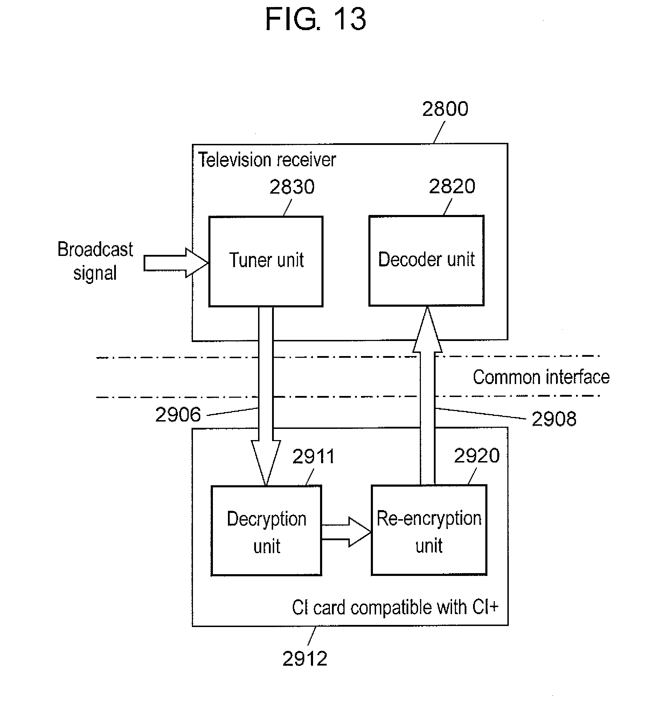

Furthermore, in Europe, CI+ (Common Interface Plus) that is a next generation standard of DVB-CI is also being introduced lately. Outlines of DVB-CI and CI+ are described with reference to Figs. 12 and 13. Fig. 12 is a block diagram showing a flow of a signal between a television receiver and a CI card compatible with DVB-CI, and Fig. 13 is a block diagram showing a flow of a signal between a television receiver and a CI card compatible with CI+.

As shown in Fig. 12, in DVB-CI, tuner unit 2830 included in television receiver 2800 receives a broadcast signal, and inputs an encrypted TS into CI card 2900. The TS is decrypted by decryption unit 2910 in CI card 2900, and decoded by decoder unit 2820 in television receiver 2800. Thus, a television program is displayed as a picture.

On the other hand, as shown in Fig. 13, CI+ that is a next generation standard operates as follows. Firstly, similar to the case of DVB-CI, tuner unit 2830 of television receiver 2800 receives a broadcast signal and inputs encrypted TS into CI card compatible with CI+ 2912. After the TS is decrypted by decryption unit 2911 in CI card compatible with CI+ 2912, the TS is encrypted again in re-encryption unit 2920 in CI card compatible with CI+ 2912, and the re-encrypted TS is output to television receiver 2800. At this time, it is confirmed whether or not CI card compatible with CI+ 2912 and television receiver 2800 are compatible with the specifications of CI+. When both are determined to be compatible with the specifications of CI+, decoder unit 2820 of television receiver 2800 decodes the TS.

DVB-CI is thought to have a risk of being illegally used since a signal is not encrypted in a route in which a signal decrypted by CI card 2900 is decoded by decoder unit 2820. Meanwhile, in the system of CI+, also in a position from CI card compatible with CI+ 2912 to decoder unit 2820, contents are protected (see, for example, Non Patent Literature 2).

Various specification limitations are imposed on signals to be decrypted by a CI card. In particular, the bit rate is 58 Mbps at maximum for a CI card compatible with DVB-CI, and 96 Mbps at maximum for a CI card compatible with CI+. In conventional television receiving systems, when a CI card is inserted into an adaptor, all digital broadcast signals enter the CI card. In other words, conventional television receiving systems have specifications in which broadcast signals always continue to enter the CI card even when a channel is switched in a state in which the CI card is inserted into the adaptor.

Furthermore, since DVB-S2 (Digital Video Broadcasting Satellite - Second Generation) that is an European satellite broadcast signal may theoretically take a bit rate of 27.5 Mbps to 82.4 Mbps (in a case where a symbol rate is 27.776 Mbaud), a broadcast signal whose bit rate exceeds the specifications of DVB-CI or CI+ may be introduced.

Conventional television receiving systems have specifications in which when a CI card is inserted into a PCMCIA interface, all signals except for analog signals enter the CI card although free broadcast can be viewed and listened to even if a signal does not pass through the CI card. Accordingly, when a broadcast signal whose bit rate exceeds the specifications of DVB-CI or CI+ is introduced, if a conventional television receiving system is used as it is, broadcast signals out of the range of the specifications of DVB-CI or CI+ enter the CI card, which may cause problems such as block noise.

### [Citation List]

### [Patent Literature]

Patent Literature 1: Japanese Patent Application Unexamined Publication No. 2008-066764 (Fig. 15)

### [Non Patent Literature]

Non Patent Literature 1: EUROPEAN STANDARD EN50221, Common Interface Specifications for Conditional Access and other Digital Video Broadcasting Decoder Applications, English Version, Ref. No. EN50221: 1996E, February 1997
Non Patent Literature 2: CI Plus Specifications. V1.1 (2008-11)

### SUMMARY OF THE INVENTION

A television receiver of the present invention includes a tuner unit, a tuner switching unit, a CI unit, a decoder unit, a CI switching unit and a control unit. The tuner unit has a plurality of tuners which receive digital broadcast. The tuner switching unit switches signals output by the tuner unit. The CI unit is an interface of the CI card. The decoder unit decrypts the received digital broadcast signal and outputs a picture. The CI switching unit switches between outputting a signal output by the tuner switching unit to the CI unit and outputting the signal to the decoder unit. The control unit controls the tuner unit, the tuner switching unit and the CI switching unit.

The control unit confirms whether or not the signal output by the tuner unit is within a range of specifications of DVB-CI. When the signal output by the tuner unit is within the range of the specifications of DVB-CI, the control unit controls the CI switching unit so that a signal input from the tuner switching unit is input into the CI unit and a signal output by the CI unit is input into the decoder unit.

On the other hand, when the signal output by the tuner unit is out of the range of the specifications of DVB-CI, the control unit controls the CI switching unit so that the signal input from the tuner switching unit is input into the decoder unit.

With such a configuration, even when a signal out of the range of the specifications of DVB-CI is received, block noise is not generated and pictures with excellent picture quality can be displayed because the signal is not input into the CI card.

Furthermore, the television receiver of the present invention includes a tuner unit, a tuner switching unit, a module unit, a decoder unit, a module switching unit and a control unit. The tuner unit includes a plurality of tuners which receive digital broadcast. The tuner switching unit switches signals output by the tuner unit. The module unit is an interface of a module card. The decoder unit decrypts a received digital broadcast signal and outputs pictures. The module switching unit switches between outputting a signal output by the tuner switching unit to the module unit and outputting the signal to the decoder unit. The control unit controls the tuner unit, the tuner switching unit and the module switching unit.

The control unit confirms whether or not the signal output by the tuner unit is within a range of specifications of the module card. When the signal is within the range of the specifications of the module card, the control unit controls the module switching unit so that a signal input from the tuner switching unit is input into the module unit and a signal output by the module unit is input into the decoder unit.

On the other hand, when the signal is out of the range of the specifications of the module card, the control unit controls the module switching unit so that the signal input from the tuner switching unit is input into the decoder unit.

### BRIEF DESCRIPTION OF THE DRAWINGS

Fig. 1 is a conceptual diagram of a television receiving system in accordance with a first exemplary embodiment of the present invention.
Fig. 2 is a block diagram showing a configuration of the television receiving system in accordance with the first exemplary embodiment of the present invention.
Fig. 3 is a flowchart of the television receiving system when a CI card is inserted in accordance with the first exemplary embodiment of the present invention.
Fig. 4A is a flowchart of the television receiving system when a channel is changed in accordance with the first exemplary embodiment of the present invention.
Fig. 4B is a flowchart of the television receiving system when a channel is changed in accordance with the first exemplary embodiment of the present invention.
Fig. 5A is a flowchart of the television receiving system when a channel is changed in accordance with the first exemplary embodiment of the present invention.
Fig. 5B is a flowchart of the television receiving system when a channel is changed in accordance with the first exemplary embodiment of the present invention.
Fig. 6 is a conceptual diagram of a television receiving system in accordance with a second exemplary embodiment of the present invention.
Fig. 7 is a block diagram showing a configuration of the television receiving system in accordance with the second exemplary embodiment of the present invention.
Fig. 8 is a flowchart of the television receiving system when a CI card is inserted in accordance with the second exemplary embodiment of the present invention.
Fig. 9A is a flowchart of the television receiving system when a channel is changed in accordance with the second exemplary embodiment of the present invention.
Fig. 9B is a flowchart of the television receiving system when a channel is changed in accordance with the second exemplary embodiment of the present invention.
Fig. 10A is a flowchart of the television receiving system when a channel is changed in accordance with the second exemplary embodiment of the present invention.
Fig. 10B is a flowchart of the television receiving system when a channel is changed in accordance with the second exemplary embodiment of the present invention.
Fig. 11 is a block diagram showing a configuration of a tuner unit and a tuner switching unit of another example of a television receiving system in accordance with the second exemplary embodiment of the present invention.
Fig. 12 is a block diagram showing a conventional flow of a signal between a television receiver and a CI card.
Fig. 13 is a block diagram showing a conventional flow of a signal between a television receiver and a CI card compatible with CI+.

### DETAILED DESCRIPTION OF THE PREFERRED EMBODIMENTS

### FIRST EXEMPLARY EMBODIMENT

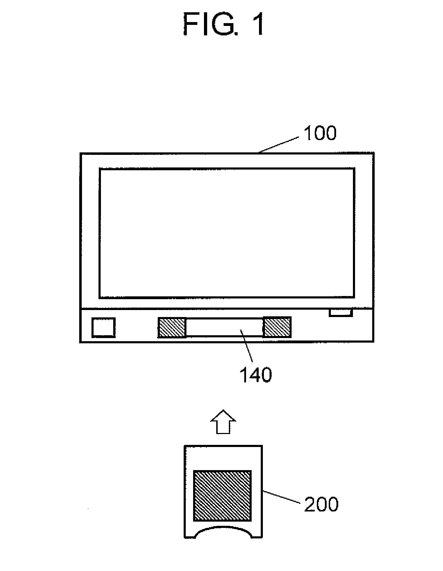

Hereinafter, the preferred embodiments for carrying out the present invention are described with reference to drawings. In a television receiving system in accordance with a first exemplary embodiment of the present invention, when a CI card is inserted into a television receiver compatible with DVB-CI in a state in which the television receiver receives a broadcast signal, or when a channel of a broadcast signal is switched in a state in which the CI card is inserted into the television receiver and when a received signal after switching is out of specifications of DVB-CI, a path of the signal is switched so that the signal does not enter the CI card. Fig. 1 is a conceptual diagram of a television receiving system in accordance with the first exemplary embodiment of the present invention.

Television receiver 100 includes CI unit 140 having a PCMCIA interface into which CI card 200 is inserted. Television receiver 100 incorporates a CPU (Central Processing Unit) as a control unit for determining information that CI card 200 has been inserted, and determining whether or not information of a tuned broadcast signal satisfies the specifications of DVB-CI.

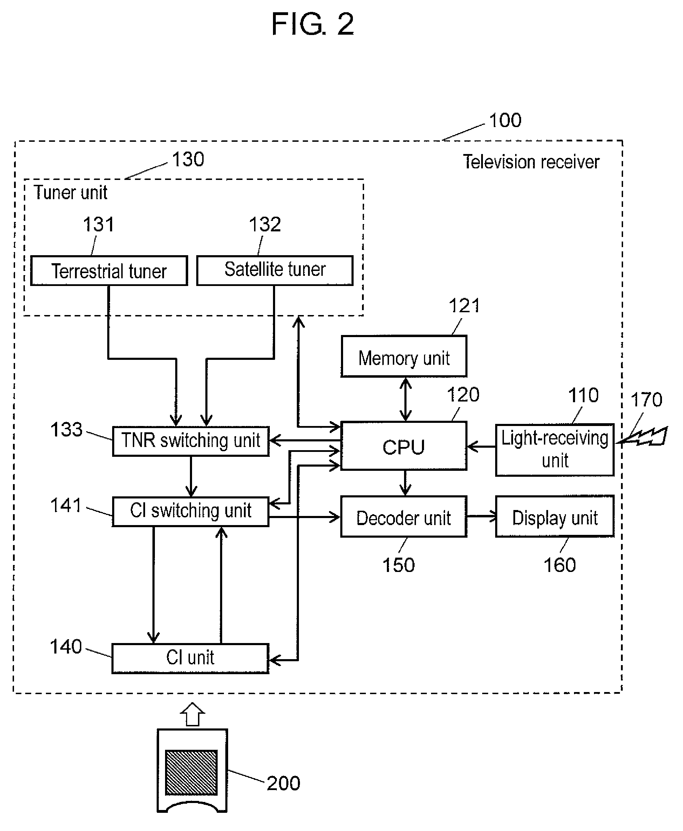

Next, a circuit configuration of a television receiving system is described. Fig. 2 is a block diagram showing a configuration of the television receiving system in accordance with the first exemplary embodiment of the present invention.

As shown in Fig. 2, television receiver 100 includes light-receiving unit 110, CPU 120, memory unit 121, tuner unit 130, tuner switching unit (referred to as a "TNR switching unit" in the drawing) 133, CI unit 140, CI switching unit 141, decoder unit 150, and display unit 160.

Tuner unit 130 includes terrestrial tuner 131 and satellite tuner 132. Terrestrial tuner 131 receives terrestrial digital broadcast. Satellite tuner 132 receives satellite digital broadcast. In other words, tuner unit 130 has a plurality of tuners which receive digital broadcast. Then, tuner unit 130 outputs signals of the received terrestrial digital broadcast and satellite digital broadcast to tuner switching unit 133. Tuner switching unit 133 switches the signal output from tuner 130 under the control of CPU 120.

Light-receiving unit 110 receives user's instructions for tuning by remote control signal 170, and transmits remote control signal 170 to CPU 120.

CPU 120 detects whether CI card 200 is inserted or not from CI unit 140, and writes information A on whether CI card 200 is inserted or not in memory unit 121. When CPU 120 receives instructions for channel switching from light-receiving unit 110 by remote control signal 170, CPU 120 allows tuner unit 130 (specifically, terrestrial tuner 131 or satellite tuner 132) which is designated by the instructions for channel switching to select a channel desired by a user. Then, CPU 120 allows tuner switching unit 133 to select a designated tuner. Furthermore, CPU 120 obtains information B on the tuned channel from tuner section 130 and writes it into memory unit 121. Then, when satellite tuner 132 receives a broadcast signal, CPU 120 calculates a bit rate of the signal, and writes information C on whether the bit rate is within the range of the specifications of DVB-CI (the bit rate is 58 Mbps or less) or out of the range (the bit rate is more than 58 Mbps) into memory unit 121. Based on such information A, B and C, CPU 120 determines whether or not a signal needs to be transmitted to CI unit 140. Then, CPU 120 issues a command to CI switching unit 141 as to which of CI unit 140 or decoder unit 150 an input signal from tuner switching unit 133 is output to. Furthermore, CPU 120 commands decoder unit 150 to output a signal that is to be displayed on display unit 160. As mentioned above, CPU 120 as a control unit controls tuner unit 130, tuner switching unit 133 and CI switching unit 141.

Memory unit 121 stores information transmitted from CPU 120, that is, information A on whether or not CI card 200 is inserted and information B on a channel tuned by terrestrial tuner 131 or satellite tuner 132. Furthermore, when satellite tuner 132 receives a broadcast signal, CPU 120 calculates a bit rate of the signal and stores information C on whether or not the bit rate is within the specifications of DVB-CI in memory unit 121. Furthermore, when information necessary for processing to be carried out in CPU 120 is requested from CPU 120, memory unit 121 outputs such information to CPU 120.

Terrestrial tuner 131 receives a terrestrial digital broadcast signal and a terrestrial analog broadcast signal, receives instructions for tuning from CPU 120, and tunes to a frequency as a tuning frequency of a broadcast station instructed to be tuned by a user. Then, terrestrial tuner 131 transmits the tuned broadcast signal to tuner switching unit 133. Furthermore, terrestrial tuner 131 transmits information on the tuned broadcast signal to CPU 120. When the instructions for tuning from CPU 120 are transmitted to satellite tuner 132 mentioned below, terrestrial tuner 131 stops outputting the broadcast signal. Since the digital broadcast signals DVB-T (Digital Video Broadcasting - Terrestrial) and DVB-T2 (Digital Video Broadcasting - Second Generation Terrestrial) output from terrestrial tuner 131 are slower in terms of the bit rate as compared with DVB-S (Digital Video Broadcasting Satellite) and DVB-S2, it is assumed that the digital broadcast signal from terrestrial tuner 131 cannot take a bit rate out of the range of the specifications of DVB-CI. Furthermore, terrestrial tuner 131 may be able to receive CATV broadcast.

Satellite tuner 132 receives a satellite digital broadcast signal, receives command for tuning from CPU 120, and tunes to a frequency as a tuning frequency of a broadcast station instructed to be tuned by a user. Then, satellite tuner 132 transmits the tuned broadcast signal to tuner switching unit 133. Furthermore, satellite tuner 132 transmits information on the tuned broadcast signal to CPU 120. When the instructions for tuning from CPU 120 are transmitted to terrestrial tuner 131, satellite tuner 132 stops outputting the broadcast signal.

Tuner switching unit 133 receives instructions from CPU 120, and selects a tuner that outputs a broadcast signal instructed to be tuned by a user. Then, tuner switching unit 133 transmits a broadcast signal from the selected tuner to CI switching unit 141.

CI unit 140 has a PCMCIA interface into which CI card 200 is input. When CI switching unit 141 receives instructions from CPU 120 and is selected to output a signal to CI unit 140, a signal from CI switching unit 141 is input into CI card 200 that has been inserted into CI unit 140. The input single is subjected to descramble processing by CI card 200, then output from CI card 200, and transmitted to CI switching unit 141 again. Furthermore, when CI card 200 is inserted into CI unit 140, CI unit 140 transmits information that CI card 200 has been inserted, and information such as types, versions, and the like, of CI card 200 to CPU 120.

CI switching unit 141 receives a command from CPU 120, and switches between outputting a signal, which is transmitted from tuner switching unit 133 and output from tuner unit 130, to CI unit 140 and outputting the signal to decoder unit 150. When CI switching unit 141 transmits the signal to CI unit 140, the signal is subjected to descrambling processing and returned from CI unit 140 again. Then, CI switching unit 141 outputs the signal to decoder unit 150.

Decoder unit 150 decrypts the signal transmitted from CI switching unit 141, that is, a received digital broadcast signal and outputs a pictures. Then, decoder unit 150 transmits the decrypted signal to display unit 160. Note here that decoder unit 150 may have an image processing circuit not only for decryption processing but also for improving picture quality.

Display unit 160 displays the signal transmitted from decoder unit 150. Display unit 160 is, for example, a plasma display panel, a liquid crystal panel, an organic EL panel, a cathode ray tube, and the like.

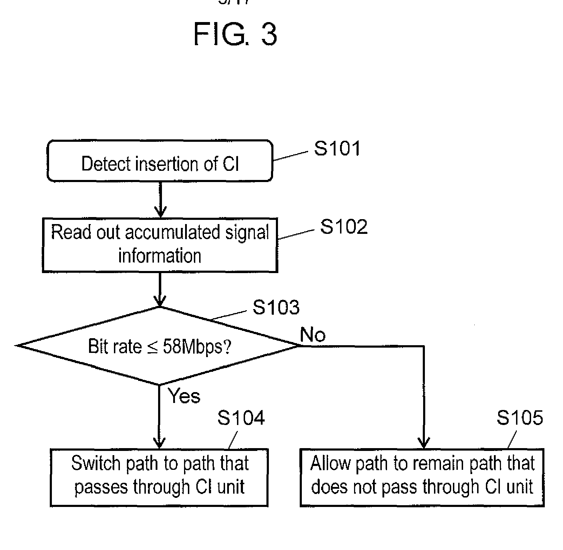

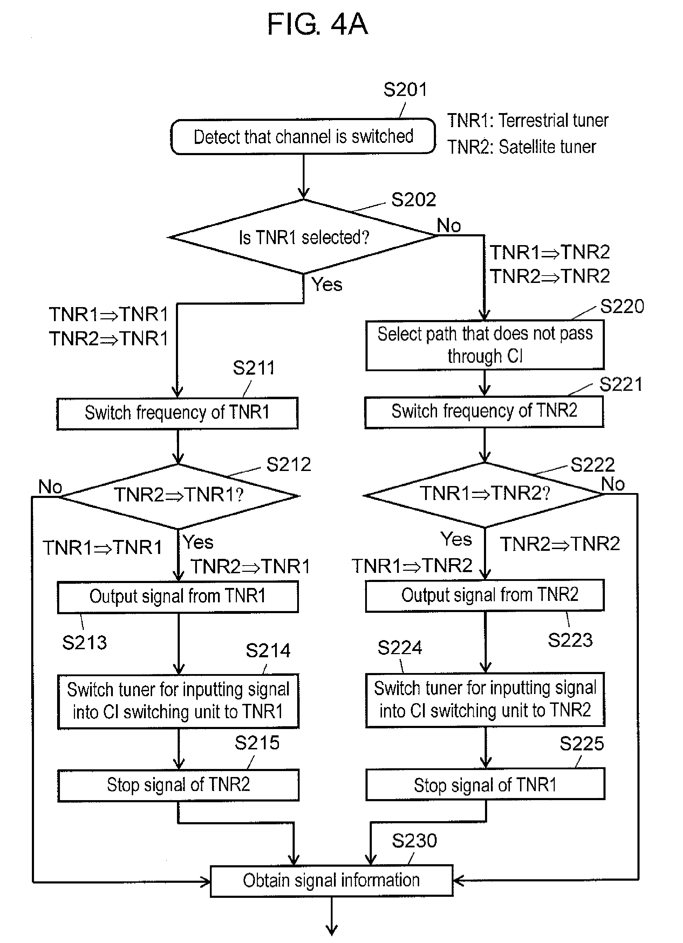

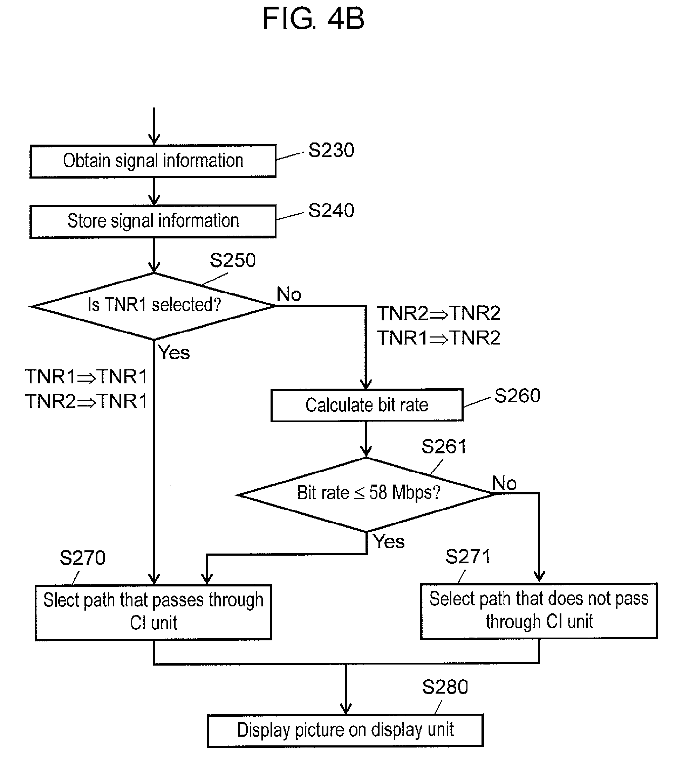

An operation of a television receiving system configured as mentioned above in this exemplary embodiment is described with reference to Figs. 3, 4A, and 4B.

Fig. 3 is a flowchart of the television receiving system when a CI card is inserted in accordance with the first exemplary embodiment of the present invention. As shown in Fig. 3, an operation flow of the television receiving system when CI card 200 is inserted into the PCMCIA interface during the reception of broadcast.

Firstly, CPU 120 detects the insertion of CI card 200 into CI unit 140 having the PCMCIA interface (step S101), it reads out signal information that is being received and that is accumulated in memory unit 121 (step S102). Then, based on the signal information read out in step S102, CPU 120 determines whether or not the received signal output from tuner unit 130 is within the range of specifications of DVB-CI (the bit rate of the signal is 58 Mbps or less) (step S103). When the signal is within the range of the specifications of DVB-CI (the bit rate of the signal is 58 Mbps or less) ("Yes" in step S103), CPU 120 changes a path through which a signal passes to a path that passes though CI unit 140 (S104). In other words, CPU 120 controls CI switching unit 141 so that a signal input from tuner switching unit 133 is input into CI unit 140, and a signal output by CI unit 140 is input into decoder unit 150.

On the other hand, when the signal is out of the range of the specifications of DVB-CI (the bit rate of the signal is more than 58 Mbps) ("No" in step S103), CPU 120 allows the path through which a signal passes to remain a path that does not pass through CI unit 140 (step S105). That is to say, CPU 120 controls CI switching unit 141 so that the signal input from tuner switching unit 133 is input into decoder unit 150.

Next, Figs. 4A and 4B are flowcharts of the television receiving system when a channel is changed in accordance with the first exemplary embodiment of the present invention. Figs. 4A and 4B respectively show an operation flow of the television receiving system when a channel is switched during the reception of digital broadcast in a state in which CI card 200 is inserted. In Figs. 4A and 4B, terrestrial tuner 131 is referred to as TNR1, and satellite tuner 132 is referred to as TNR2.

Firstly, when CPU 120 detects that a channel of digital broadcast is switched in a state in which CI card 200 is inserted (step S201), CPU 120 determines whether or not a channel selected by a user is a channel received by terrestrial tuner 131 (step S202). At this time, when terrestrial tuner 131 is not selected, it is meant that satellite tuner 132 is selected.

When a user selects a channel received by terrestrial tuner 131 ("Yes" in step S202), a tuning frequency of terrestrial tuner 131 is changed to a frequency designated by the user (step S211). At this time, it is determined whether or not the channel switching selected by the user is switching from satellite tuner 132 to terrestrial tuner 131 (step S212).

When satellite tuner 132 is switched to terrestrial tuner 131 ("Yes" in step S212), a signal is output from terrestrial tuner 131 (step S213). However, at this time, since tuner switching unit 133 shown in Fig. 2 selects satellite tuner 132, a signal output in step S213 reaches only before tuner switching unit 133. Thereafter, CPU 120 switches tuner switching unit 133 to terrestrial tuner 131, and controls so that a signal of terrestrial tuner 131 is input into CI switching unit 141 (step S214). A flow from step S213 to step S214 is carried out in such an order that a signal input into CI switching unit 141 is not disconnected at the time of channel switching. Furthermore, in order to take measures against radiation, a signal of satellite tuner 132 that does not output a signal to CI switching unit 141 is stopped (step S215). Then, CPU 120 obtains signal information after channel change from terrestrial tuner 131 (step S230).

On the other hand, when satellite tuner 132 is not changed to terrestrial tuner 131 ("No" in step S212), that is to say, when terrestrial tuner 131 continues to be used, only by changing a tuning frequency of terrestrial tuner 131, a broadcast signal selected by a user is output to decoder unit 150 through CI unit 140 via CI switching unit 141. Therefore, CPU 120 does not need to switch signal paths. Consequently, later than step S211, CPU 120 obtains signal information after channel change from terrestrial tuner 131 (step S230).

Furthermore, when a user does not select a channel received by terrestrial tuner 131 ("No" in step S202), that is to say, when the user selects a channel received by satellite tuner 132, broadcast signals received by satellite tuner 132 may include a bit rate exceeding the specifications of DVB-CI. Accordingly, CPU 120 switches a path though which a signal passes to a path that does not pass through CI unit 140 (step S220). That is to say, CPU 120 controls CI switching unit 141 so that a signal output by satellite tuner 132 is input into decoder unit 150. Thereafter, CPU 120 changes the tuning frequency of satellite tuner 132 to a frequency designated by a user (step S221). At this time, it is determined whether or not the channel switching selected by a user is switching from terrestrial tuner 131 to satellite tuner 132 (step S222).

Next, when terrestrial tuner 131 is switched to satellite tuner 132 in tuner unit 1130 by the control of CPU 1120 ("Yes" in step S222), a signal is output from satellite tuner 132 (step S223). Thereafter, CPU 120 connects tuner switching unit 133 to satellite tuner 132, and controls so that a signal of satellite tuner 132 is input into CI switching unit 141 (step S224). Furthermore, in order to take measures against radiation, a signal from terrestrial tuner 131 that does not output a signal to CI switching unit 141 is stopped (step S225). Then, CPU 120 obtains signal information after channel change from satellite tuner 132 (step S230).

On the other hand, when terrestrial tuner 131 is not switched to satellite tuner 132 ("No" in step S222), that is to say, when satellite tuner 132 continues to be used, only by changing a tuning frequency of satellite tuner 132, a broadcast signal selected by a user is output to decoder unit 150 via CI switching unit 141 without passing through CI unit 140. Therefore, CPU 120 does not need to switch signal paths. Thus, later than step S222, CPU 120 obtains signal information after channel change from satellite tuner 132 (step S230).

In step S230, after CPU 120 obtains signal information from the tuner, it stores signal information after channel change in memory unit 121 so that channel information that is being received can be referred to when CI card 200 is inserted (step S240). Herein, it is again determined whether or not the channel selected by a user is the channel received by terrestrial tuner 131 (step S250).

When a user selects the channel received by terrestrial tuner 131 ("Yes" in step S250), CPU 120 changes a path through which a signal passes to a path that passes through CI unit 140 (step S270). Then, a signal from terrestrial tuner 131 is displayed on display unit 160 (step S280).

On the other hand, when a user does not select the channel received by terrestrial tuner 131 ("No" in step S250), that is to say, when the user selects a channel received by satellite tuner 132, CPU 120 calculates a bit rate of a signal of satellite broadcast output from satellite tuner 132 from the information obtained in step S230 (step S260). Then, CPU 120 determines whether or not the calculated bit rate of the signal that is being received is within the range of the specifications of DVB-CI (the bit rate of the signal is 58 Mbps or less) (step S261).

Next, when the bit rate is within the range of the specifications (the bit rate of the signal is 58 Mbps or less) ("Yes" in step S261), a path through which a signal passes is changed to a path that passes through CI unit 140 (step S270). That is to say, CPU 120 controls CI switching unit 141 so that the signal input from tuner switching unit 133 is input into CI unit 140 and a signal output by CI unit 140 is input into decoder unit 150. Then, a signal from satellite tuner 132 is displayed on display unit 160 (step S280).

On the other hand, when the bit rate is out of the range of the specifications (the range in which the bit rate of the signal is 58 Mbps or less) ("No" in step S261), a path through which a signal passes is changed to a path that does not pass through CI unit 140 (step S271). That is to say, CPU 120 controls CI switching unit 141 so that the signal input from tuner switching unit 133 is input into decoder unit 150. Thereafter, a signal from satellite tuner 132 is displayed on display unit 160 (step S280).

With such a configuration, since a path through which a signal passes is automatically switched by determining a bit rate of a signal of satellite broadcast, even when a signal of the satellite broadcast beyond the specifications of DVB-CI is received, a user can enjoy broadcasted program without being required to do anything particular.

In particular, when this configuration is employed, since a signal of free broadcast that has not been scrambled and that is out of the range of the specifications (the bit rate of the signal is more than 58 Mbps) of DVB-CI of satellite broadcast is not input into CI card 200, problems such as block noise can be prevented even when a user himself/herself is not required to insert and extract the CI card.

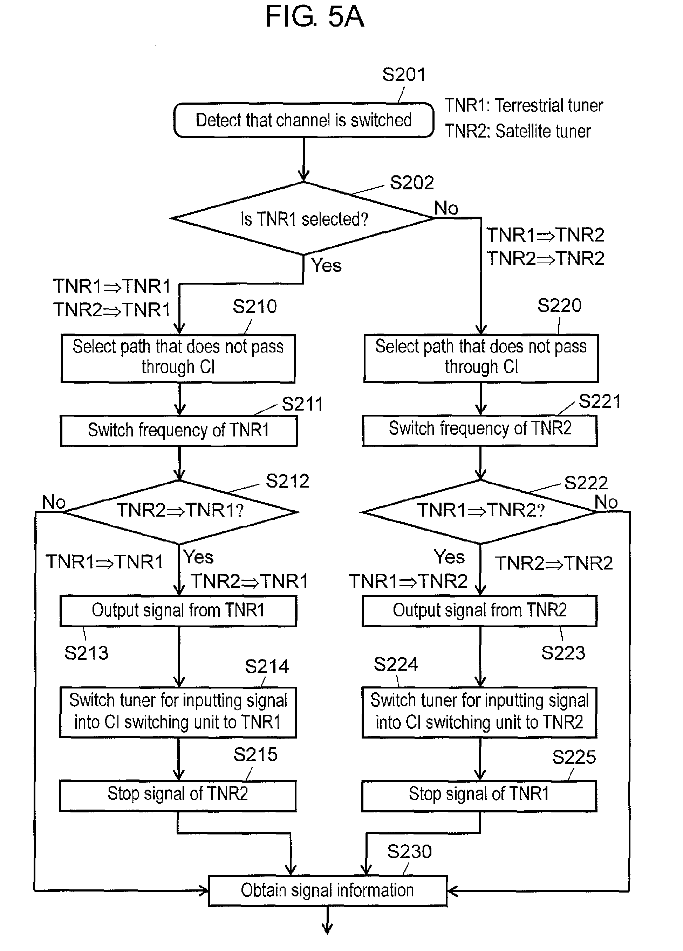

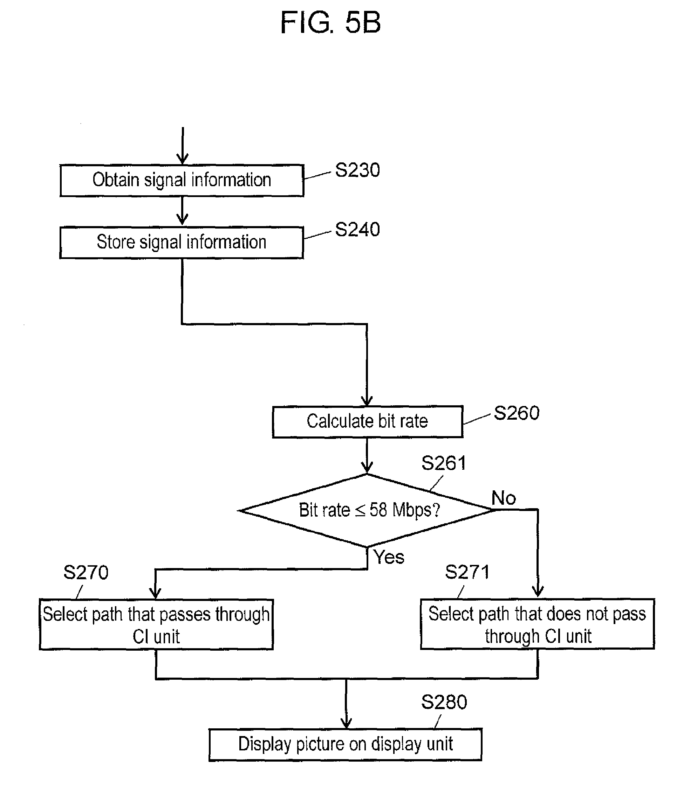

Note here that in this exemplary embodiment, terrestrial digital broadcast is in the specifications of DVB-CI (the bit rate of the signal is 58 Mbps or less), but terrestrial digital broadcast and cable broadcast may have a signal out of the range of the specifications of DVB-CI (the range in which the bit rate of the signal is 58 Mbps or less). In this case, as shown in a flowchart of the television receiving system when a channel is changed in accordance with the first exemplary embodiment of the present invention in Figs. 5A and 5B, even when terrestrial tuner 131 is selected in step 202, firstly, a path through which a signal passes is switched to a path that does not pass through CI unit 140 (step S210). That is to say, CPU 120 controls CI switching unit 141 so that a signal input from terrestrial tuner 131 is input into decoder unit 150. Signal information after channel change is stored in memory unit 121 in step S240, and then CPU 120 calculates a bit rate of a signal of a terrestrial broadcasting signal output from terrestrial tuner 131 from the information obtained in step S230 (step S260). Other configurations are the same as those in the flowchart in Figs. 4A and 4B.

Note here that as shown in Fig. 2, light-receiving unit 110 of television receiver 100 in this exemplary embodiment receives instructions for channel switching by remote control signal 170. In this way, with an external input such as remote control for outputting remote control signal 170 and a tuning button disposed in television receiver 100, the control unit of television receiver 100 in this exemplary embodiment can select a channel to be received. Furthermore, television receiver 100 may control CI switching unit 141 so that the signal input from tuner switching unit 133 is output to CI unit 140 based on an external input such as remote control for outputting remote control signal 170 and a tuning button disposed in television receiver 100, and may control CI switching unit 141 so that a signal input from CI unit 140 is output to decoder unit 150. Furthermore, television receiver 100 may control so that CI switching unit 141 outputs a signal to decoder unit 150 based on the signal of the external input. That is to say, the control unit of television receiver 100 may control CI switching unit 141 so that any of switching control of the signal mentioned above can be selected. Thus, a user can view and listen to a scrambled channel with an easy operation. Furthermore, a user can set up television receiver 100 manually so that a not-scrambled channel that is out of the range of the specifications of DVB-CI (the range in which the bit rate of the signal is 58 Mbps or less) can be viewed and listened to.

### SECOND EXEMPLARY EMBODIMENT

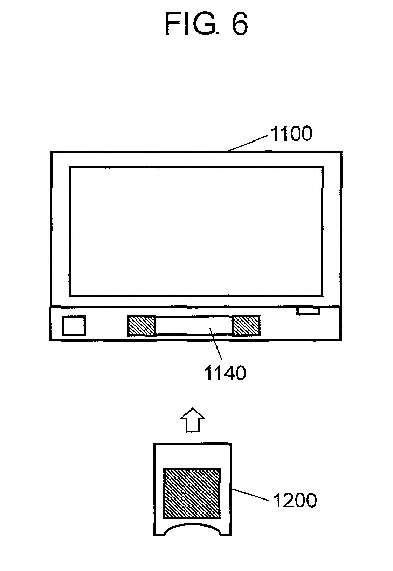

Fig. 6 shows a conceptual diagram of a television receiving system in accordance with a second exemplary embodiment of the present invention. In the television receiving system in this exemplary embodiment, when CI card 1200 is inserted into television receiver 1100 in a state in which television receiver 1100 compatible with a CI card having a plurality of specifications (DVB-CI and CI+) receives a broadcast signal or when a channel of broadcast signal is switched in a state in which CI card 1200 is inserted into television receiver 1100, if the received signal after switching is out of the range of the specifications of CI card 1200, a path of a signal is switched so that the signal does not enter CI card 1200.

Television receiver 1100 includes CI unit 1140 having a PCMCIA interface into which CI card 1200 is inserted. Television receiver 1100 incorporates CPU as a control unit for determining information that CI card 1200 has been inserted, determining the type of inserted CI card 1200, and determining whether or not information of a tuned broadcast signal satisfies the specifications of the inserted CI card 1200, when CI card 1200 is inserted into CI unit 1140.

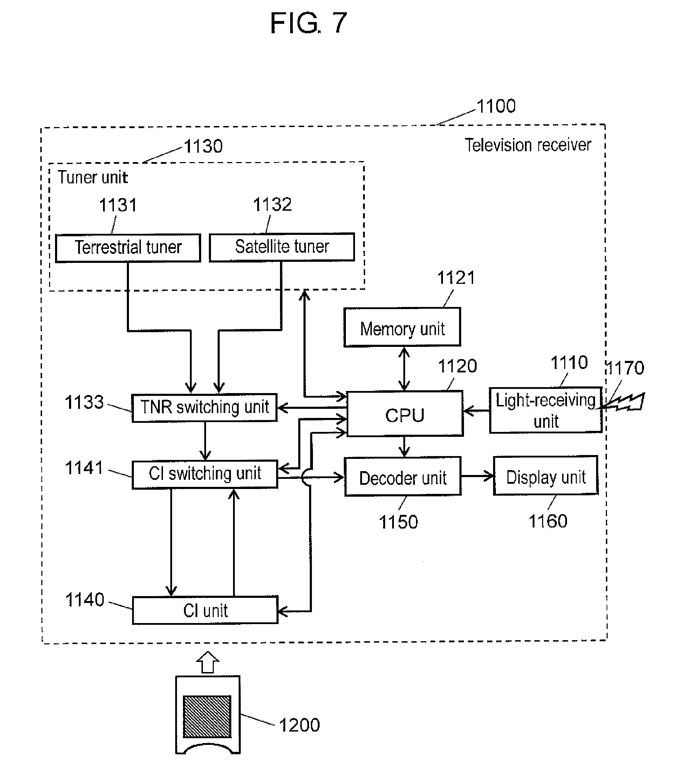

Next, a circuit configuration of the television receiving system is described in detail. Fig. 7 is a block diagram showing a configuration of the television receiving system in accordance with the second exemplary embodiment of the present invention.

As shown in Fig. 7, television receiver 1100 includes light-receiving unit 1110, CPU 1120, memory unit 1121, tuner unit 1130, tuner switching unit (which is referred to as a "TNR switching unit" in the drawing) 1133, CI unit 1140, CI switching unit 1141, decoder unit 1150, and display unit 1160.

Tuner unit 1130 includes terrestrial tuner 1131 and satellite tuner 1132. Terrestrial tuner 1131 receives terrestrial digital broadcast. Satellite tuner 1132 receives satellite digital broadcast. Tuner unit 1130 receives digital broadcast, and outputs signals from the terrestrial digital broadcast and the satellite digital broadcast to tuner switching unit 1133. Tuner switching unit 1133 switches a signal output by tuner unit 1130.

Light-receiving unit 1110 receives user's instructions for tuning by remote control signal 1170, and transmits remote control signal 1170 to CPU 1120.

CPU 1120 detects whether CI card 1200 has been inserted or not from CI unit 1140, and writes whether CI card 1200 has been inserted or not in memory unit 1121. Furthermore, communication between CPU 1120 and CI card 1200 that has been inserted into CI unit 1140 is carried out so as to determine the type of inserted CI card 1200. For example, when CPU 1120 and CI card 1200 are communicated successfully, CI card 1200 that has been inserted into CI unit 1140 is determined to be a card compatible with CI+. When the communication fails, CI card 1200 is determined to be a card compatible with DVB-CI. CPU 1120 writes information B on the type of CI card 1200 into memory unit 1121.

When instructions for channel switching is made from light-receiving unit 1110 by remote control signal 1170, CPU 1120 allows tuner unit 1130 (specifically, terrestrial tuner 1131 or satellite tuner 1132) that has been designated by the instructions for channel switching to tune to a channel desired by a user. Then, CPU 1120 allows tuner switching unit 1133 to select the designated tuner. Furthermore, CPU 1120 obtains information C on the tuned channel from tuner unit 1130, and writes it into memory unit 1121. Then, when a broadcast signal is received by satellite tuner 1132, a bit rate of the signal is calculated. Herein, CPU 1120 reads out bit rate D that is a maximum value of the specifications to which the CI card is compatible with in card information B that has been written in memory unit 1121 in advance, and writes information E as to whether the calculated bit rate of the signal is not more than bit rate D as the maximum value of the specifications to which CI card is compatible with or more than bit rate D, into memory unit 1121. CPU 1120 determines whether or not a signal needs to be transmitted to CI unit 1140 based on the information A, C, and E. Then, CPU 1120 commands CI switching unit 1141 as to which of CI unit 1140 or decoder unit 1150 a signal input from tuner switching unit 1133 is output to. Furthermore, CPU 1120 commands decoder unit 1150 to output a signal to display unit 1160.

Information D of the maximum bit rate to which various types of CI cards 1200 compatible with is written in memory unit 1121 in advance, and television receiver 1100 is compatible with CI cards 1200. Furthermore, memory unit 1121 stores information transmitted from CPU 1120, that is, information A on whether or not CI card 1200 has been inserted, information B on types of inserted cards, and information C on a channel that has been tuned by terrestrial tuner 1131 or satellite tuner 1132. In addition, CPU 1120 calculates the bit rate of a signal when a broadcast signal is received by satellite tuner 1132, and stores information E on whether or not the calculated bit rate is within the range of the specifications to which the inserted CI card 1200 is compatible with, in memory unit 1121. Then, when memory unit 1121 outputs the information necessary for processing carried out in CPU 1120 to CPU 1120 if it is requested from CPU 1120.

Terrestrial tuner 1131 receives a terrestrial digital broadcast signal and an analog broadcast signal, receives instructions for tuning from CPU 1120, and tunes to a frequency, as a tuning frequency, of a broadcast station instructed to be tuned by a user. Then, terrestrial tuner 1131 transmits the tuned broadcast signal to tuner switching unit 1133. Furthermore, terrestrial tuner 1131 transmits information on the tuned broadcast signal to CPU 1120. When the instruction for tuning from CPU 1120 is transmitted to satellite tuner 1132 mentioned below, terrestrial tuner 1131 stops outputting the broadcast signal. Since a digital broadcast signal DVB-T, T2 output from terrestrial tuner 1131 has a slower bit rate as compared with DVB-S, S2, it is assumed that the digital broadcast signal from terrestrial tuner 1131 cannot be the bit rate out of the range of the specifications of DVB-CI or CI+. Furthermore, terrestrial tuner 131 can receive CATV broadcast.

Satellite tuner 1132 receives a satellite digital broadcast signal, and receives a command for tuning from CPU 1120, and tunes to a frequency, as a tuning frequency, of the broadcast station instructed to be tuned by a user. Then, satellite tuner 1132 transmits the tuned broadcast signal to tuner switching unit 1133. Furthermore, satellite tuner 1132 transmits information on the tuned broadcast signal to CPU 1120. When instructions for tuning from CPU 1120 are transmitted to terrestrial tuner 1131, satellite tuner 1132 stops outputting the broadcast signal.

Tuner switching unit 1133 receives instructions from CPU 1120, and selects a tuner of tuner unit 1130 that outputs the broadcast signal instructed to be tuned by a user. Then, tuner switching unit 1133 transmits the broadcast signal from the selected tuner to CI switching unit 1141.

CI unit 1140 has a PCMCIA interface into which CI card 1200 is inserted. When CI unit 1140 receives instructions from CPU 1120 and when CI unit 1140 is inserted into CI card 1200, CI unit 1140 transmits information that CI card 1200 has been inserted, information on the types and versions of CI cards 1200, and the like, to CPU 1120.

CI switching unit 1141 receives a command from CPU 1120 and switches between outputting a signal that is transmitted from tuner switching unit 1133 and output by tuner unit 1130 to CI unit 1140 and outputting the signal to decoder unit 1150. When CI switching unit 1141 is selected to transmit a signal to CI unit 1140, a signal from CI switching unit 1141 is input into CI card 1200 that has been inserted into CI unit 1140. The input signal is output from CI card 1200 after the above-mentioned processing is carried out according to the specifications DVB-CL and CI+ to which the inserted CI card 1200 is compatible with, then output from CI card 1200, and returned to CI switching unit 1141. Then, CI switching unit 1141 outputs this signal to decoder unit 1150.

Decoder unit 1150 decodes a signal transmitted from CI switching unit 1141, and transmits the signal to display unit 1160. Note here that decoder unit 1150 may have an image processing circuit not only for decrypting processing but also for improving picture quality.

Display unit 1160 displays a signal transmitted from decoder unit 1150. Examples of the display unit 1160 include a plasma display panel, a liquid crystal panel, an organic EL panel, a cathode ray tube, and the like.

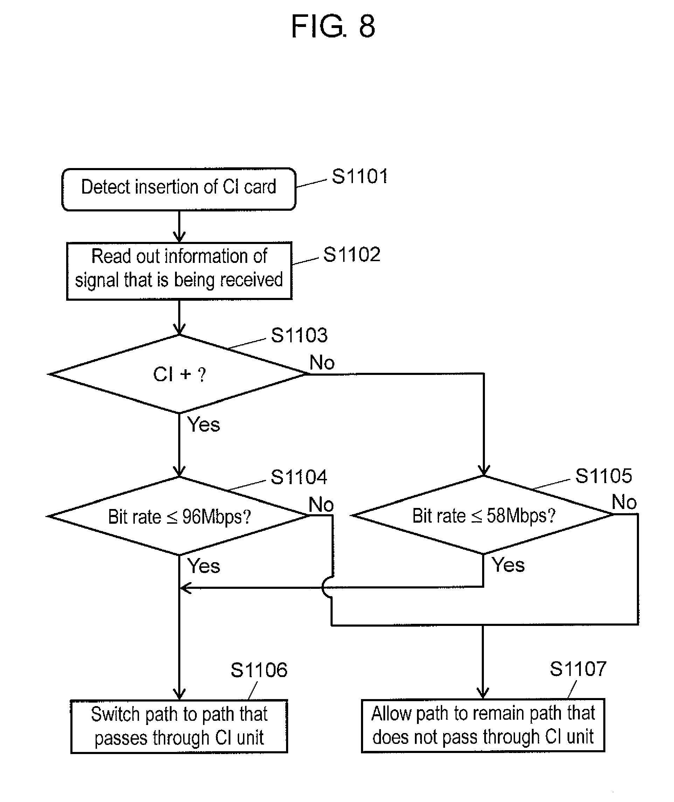

An operation of the television receiving system configured as mentioned above in this exemplary embodiment is described with reference to Figs. 8 to 10B.

Firstly, Fig. 8 is a flowchart of the television receiving system when the CI card is inserted in accordance with the second exemplary embodiment of the present invention. As shown in Fig. 8, an operation of television receiving system when CI card 1200 is inserted into a PCMCIA interface during the reception of broadcast is shown.

Firstly, when CPU 1120 detects the insertion of CI card 1200 into CI unit 1140 having a PCMCIA interface (step S1101), CPU 1120 reads out signal information that is accumulated in memory unit 1121 and that is being received (step S1102). Then, communication is attempted between CPU 1120 and CI card 1200 so as to determine the type of the CI card (step S1103). When the inserted card is a card compatible with CI+ ("Yes" in step S1103), CPU 1120 determines whether or not a bit rate of the signal that is output from tuner unit 1130 and that is being received is within the range of the specifications of CI+ (the bit rate of the signal is 96 Mbps or less) based on the signal information read out in step S1102 (step S1104). When the bit rate of the signal is within the range of the specifications of CI+ (the bit rate of the signal is 96 Mbps or less) ("Yes" in step S1104), CPU 1120 switches a path through which a signal passes to a path that passes through C1 unit 1140 (step S1106). That is to say, CPU 1120 controls CI switching unit 1141 so that a signal input from tuner switching unit 1133 is input into CI unit 1140, and a signal output by CI unit 1140 is input into decoder unit 1150.

On the other hand, when the bit rate of the signal is out of the range of the specifications of CI+ (the bit rate of the signal is more than 96 Mbps) ("No" in step S1104), CPU 1120 allows a path through which a signal passes to remain a path that does not pass through CI unit 1140 (step S1107). That is to say, CPU 1120 controls CI switching unit 1141 so that a signal input from tuner switching unit 1133 is input into decoder unit 1150.

Furthermore, when the inserted card is a card that is not compatible with CI+, that is, a card that is compatible only with the specifications of DVB-CI ("No" in step S1103), CPU 1120 determines whether the bit rate is within the range of the specifications of DVB-CI (the bit rate of the signal is 58 Mbps or less) from the information signal read out in step S1102 (step S1105). When the bit rate of the signal is within the range of the specifications of DVB-CI (the bit rate of the signal is 58 Mbps or less) ("Yes" in step S1105), CPU 1120 changes a path through which a signal passes to a path that passes though CI unit 1140 (step S1106). That is to say, CPU 1120 controls CI switching unit 1141 so that a signal input from tuner switching unit 1133 is input into CI unit 1140, and a signal output by CI unit 1140 is input into decoder unit 1150.

On the other hand, when the bit rate is out of the range of the specifications of DVB-CI (the bit rate of the signal is more than 58 Mbps) ("No" in step S1105), CPU 1120 allows a path through which a signal passes to remain a path that does not pass through CI unit 1140 (step S1107). That is to say, CPU 1120 controls CI switching unit 1141 so that a signal input from tuner switching unit 1133 is input into decoder unit 1150.

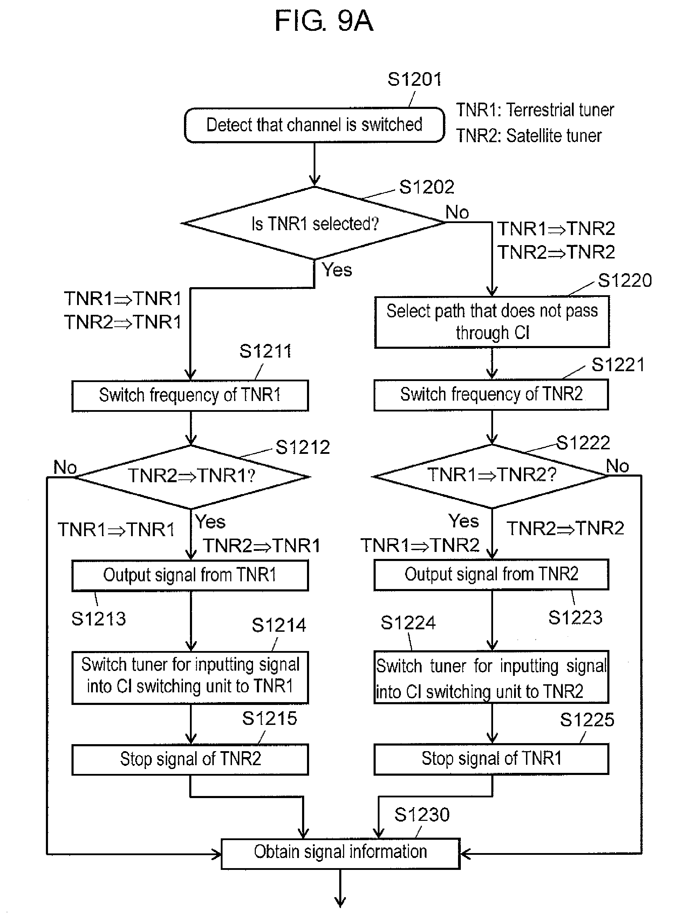

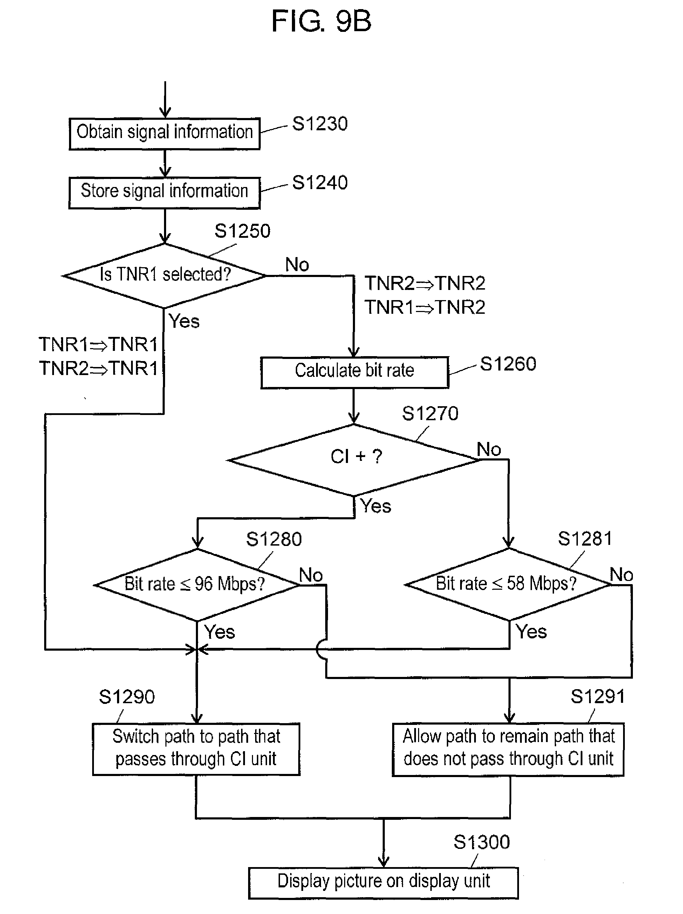

Next, Figs. 9A and 9B are flowcharts of the television receiving system when a channel of is changed in accordance with the second exemplary embodiment of the present invention. Figs. 9A and 9B show an operation when a channel is switched during the reception of digital broadcast in a state in which CI card 1200 is inserted. Note here that in Figs. 9A to 10B, terrestrial tuner 1131 is referred to as TNR1 and satellite tuner 1132 is referred to as TNR2.

Firstly, when CPU 1120 detects that a digital broadcast channel is switched in a state in which CI card 1200 is inserted (step S1201), CPU 1120 determines whether or not a channel selected by a user is a channel received by terrestrial tuner 1131 (step S1202). At this time, when terrestrial tuner 1131 is not selected, it is meant that satellite tuner 1132 is selected.

When a user selects the channel received by terrestrial tuner 1131 ("Yes" in step S1202), a tuning frequency of terrestrial tuner 1131 is changed to a frequency designated by a user (step S1211). Then, it is determined whether or not the channel switching selected by a user is switching from satellite tuner 1132 to terrestrial tuner 1131 (step S1212).

When satellite tuner 1132 is switched to terrestrial tuner 1131 ("Yes" in step S1212), a signal is output from terrestrial tuner 1131 (step S1213). However, at this time, since tuner switching unit 1133 shown in Fig. 7 selects satellite tuner 1132, a signal output in step S1213 reaches only before tuner switching unit 1133. Thereafter, CPU 1120 switches tuner switching unit 1133 to terrestrial tuner 1131, and controls so that a signal of terrestrial tuner 1131 is input into CI switching unit 1141 (step S1214). A flow from step S1213 to step S1214 is carried out in such an order that a signal input into CI switching unit 1141 is not disconnected at the time of channel switching. Furthermore, in order to take measures against radiation, a signal of satellite tuner 1132 that does not output a signal to CI switching unit 1141 is stopped (step S1215). Then, CPU 1120 obtains signal information after channel change from terrestrial tuner 1131 (step S1230).

On the other hand, when satellite tuner 1132 is not changed to terrestrial tuner 1131 ("No" in step S1212), that is to say, when terrestrial tuner 1131 continues to be used, only by changing a tuning frequency of terrestrial tuner 1131, a broadcast signal selected by a user is output to decoder unit 1150 through CI unit 1140 via CI switching unit 1141. Therefore, CPU 1120 does not need to switch signal paths. Consequently, later than step S1211, CPU 1120 obtains signal information after channel change from terrestrial tuner 1131 (step S1230).

Furthermore, when a user does not select a channel received by terrestrial tuner 1131 ("No" in step S1202), that is to say, when the user selects a channel received by satellite tuner 1132, the broadcast signal received by satellite tuner 1132 may include a bit rate exceeding the specifications of DVB-CI or CI+. Therefore, CPU 1120 switches a path though which a signal passes to a path that does not pass through CI unit 1140 (step S1220). That is to say, CPU 1120 controls CI switching unit 1141 so that a signal input from satellite tuner 1132 is input into decoder unit 1150. Thereafter, CPU 1120 changes the tuning frequency of satellite tuner 1132 to a frequency designated by a user (step S1221). At this time, CPU 1120 determines whether or not the channel switching selected by a user is channel switching from terrestrial tuner 1131 to satellite tuner 1132 (step S1222).

Next, when terrestrial tuner 1131 is switched to satellite tuner 1132 in tuner unit 1130 by the control of CPU 1120 ("Yes" in step S1222), a signal is output from satellite tuner 1132 (step S1223). Thereafter, CPU 1120 connects tuner switching unit 1133 to satellite tuner 1132, and controls so that a signal of satellite tuner 1132 is input into CI switching unit 1141 (step S1224). Furthermore, in order to take measures against radiation, a signal from terrestrial tuner 1131 that does not output a signal to CI switching unit 1141 is stopped (step S1225). Then, CPU 1120 obtains signal information after channel change from satellite tuner 1132 (step S1230).

On the other hand, when terrestrial tuner 131 is not switched to satellite tuner 132 ("No" in step S1222), that is to say, when satellite tuner 1132 continues to be used, only by changing a tuning frequency of satellite tuner 1132, a broadcast signal selected by a user is output to decoder unit 1150 via CI switching unit 1141 without passing through CI unit 1140. Therefore, CPU 120 does not need to switch signal paths. Thus, later than step S1221, CPU 1120 obtains signal information after channel change from satellite tuner 1132 (step S1230).

In step S1230, after CPU 1120 obtains signal information from the tuner, it stores signal information C after channel change in memory unit 1121 so that channel information that is being received can be referred to when CI card 1200 is inserted (step S1240). Herein, it is again determined whether or not the channel selected by a user is the channel received by terrestrial tuner 1131 (step S1250).

When a user selects the channel received by terrestrial tuner 1131 ("Yes" in step S1250), CPU 1120 changes a path through which a signal passes to a path that passes through CI unit 1140 (step S1290). Then, a signal from terrestrial tuner 1131 is displayed on display unit 1160 (step S1300).

On the other hand, when a user does not select the channel received by terrestrial tuner 1131 ("No" in step S1250), that is to say, when the user selects a channel received by satellite tuner 1132, CPU 1120 calculates a bit rate of a signal of satellite broadcast output from satellite tuner 1132 from the information obtained in step S1230 (step S1260).

Herein, communication between CPU 1120 and CI card 1200 is attempted so as to determine the type of the CI card (step S1270). When the inserted card is a card compatible with CI+ ("Yes" in step S1270), CPU 1120 determines whether or not the calculated bit rate of the signal that is being received is within the range of the specifications of CI+ (the bit rate of the signal is 96 Mbps or less) (step S1280). As a result, when the bit rate of the signal is within the range of the specifications of CI+ (the bit rate of the signal is 96 Mbps or less) ("Yes" in step S1280), CPU 1120 switches a path through which a signal passes to a path that passes through CI unit 1140 (step S1290). Then, a signal from satellite tuner 1132 is displayed on display unit 1160 (step S1300).

On the other hand, when the bit rate of the signal is out of the range of the specifications of CI+ (the range in which the bit rate of the signal is 96 Mbps or less) ("No" in step S1280), CPU 1120 allows a path through which a signal passes to be changed to a path that does not pass through CI unit 1140 (step S1291). That is to say, CPU 1120 controls CI switching unit 1141 so that a signal input from tuner switching unit 1133 is input into decoder unit 1150. Thereafter, a signal from satellite tuner 1132 is displayed on display unit 1160 (step S1300).

Furthermore, it is determined that the inserted card is a card that is not compatible with CI+, that is, a card that is compatible with the specifications of DVB-CI ("No" in step S1270), CPU 1120 determines whether or not the calculated bit rate of the signal that is being received is within the range of the specifications of DVB-CI (the bit rate of the signal is 58 Mbps or less) (step S1281). When the bit rate is within the range of the specifications of DVB-CI (the bit rate of the signal is 58 Mbps or less) ("Yes" in step S1281), CPU 1120 changes a path through which a signal passes to a path that passes though CI unit 1140 (step S1290). Then, a signal from satellite tuner 1132 is displayed on display unit 1160 (step S1300).

On the other hand, when the bit rate is out of the range of the specifications of DVB-CI (the range in which the bit rate of the signal is 58 Mbps or less) ("No" in step S1281), CPU 1120 changes a path through which a signal passes to a path that does not pass through CI unit 1140 (step S1291). That is to say, CPU 1120 controls CI switching unit 1141 so that a signal output by satellite tuner 1132 is input into decoder unit 1150. Thereafter, a signal from satellite tuner 1132 is displayed on display unit 1160 (step S1300).

With such a configuration, a path through which a signal passes is automatically switched by determining a bit rate of a signal of satellite broadcast and the specifications to which the inserted CI card is compatible with. Therefore, even when a signal of the satellite broadcast beyond the specifications of DVB-CI or CI+ is received, a user can enjoy broadcasted program without being required to do anything particular.

In particular, when this configuration is employed, since a signal of free broadcast that has not been scrambled and that is out of the range of the specifications of DVB-CI or CI+ (a bit rate of a signal is 58 Mbps or less for DVB-CI, and a bit rate of a signal is 96 Mbps or less for CI+) is not required to be input into CI card 1200, problems such as block noise can be prevented even when a user himself/herself is not required to insert and extract the CI card.

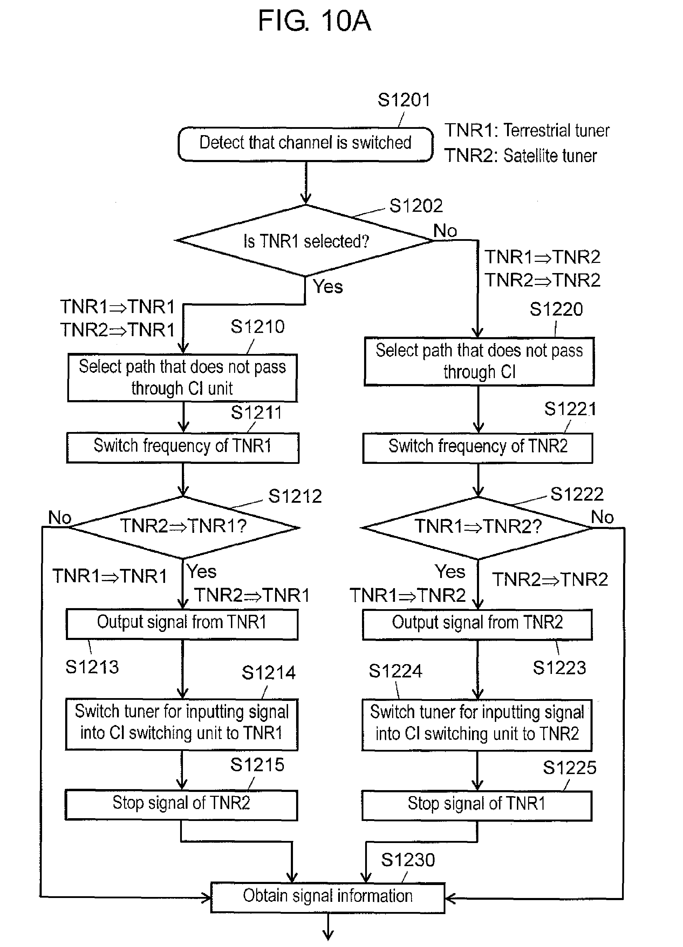

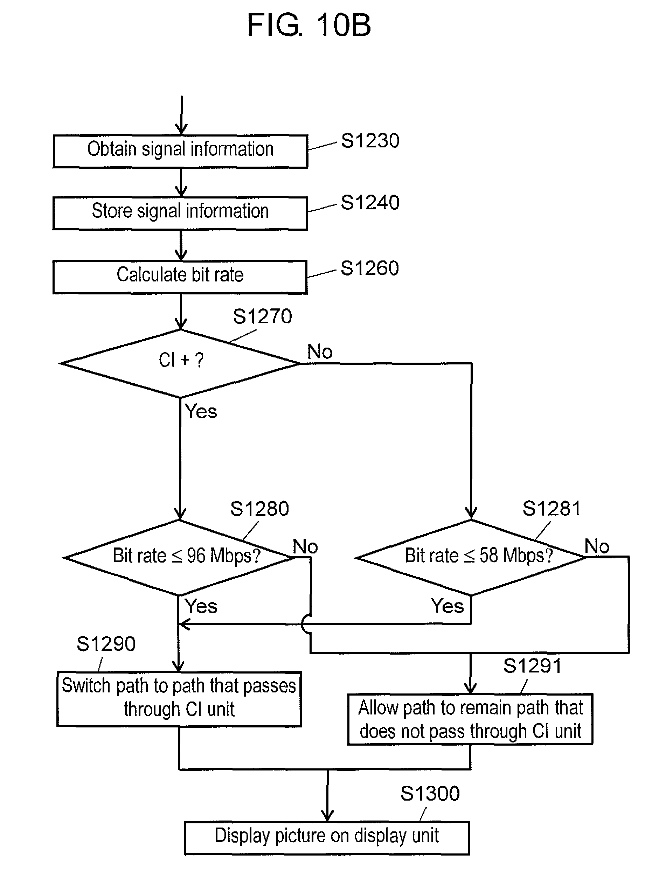

In this exemplary embodiment, terrestrial digital broadcast or cable broadcast received in TNR1 is within the range of the specifications of DVB-CI or CI+ (a bit rate of a signal is 58 Mbps or less for DVB-CI, and a bit rate of a signal is 96 Mbps or less for CI+). However, for example, when broadcast of new specifications is started, a signal that is out of the range of the specifications of DVB-CI or CI+ (the range in which a bit rate of a signal is 58 Mbps or less for DVB-CI, and a bit rate of a signal is 96 Mbps or less for CI+) may be included also in terrestrial digital broadcast and cable broadcast. In such a case, as shown in the flowcharts of Figs. 10A and 10B showing the television receiving system when a channel is changed in accordance with this exemplary embodiment, also when terrestrial tuner 1131 is selected in step 1202, CPU 1120 firstly switches a path through which a signal passes to a path that does not pass through CI unit 1140 (step S1210). Then, in step S1240, CPU 1120 stores signal information after the channel change in memory unit 1121, and then CPU 1120 calculates a bit rate of a signal of the broadcast output from terrestrial tuner 1131 from the information obtained in step S1230 (step S1260), and determines the type of the inserted cards (step S1270). The other configurations are the same as those in the flowchart shown in Figs. 9A and 9B.

In this exemplary embodiment, the control to CI unit 1140 is determined based on whether or not the bit rate is within the range of the specifications of DVB-CI or CI+ (the bit rate of the signal is 58 Mbps or less for DVB-CI, and the bit rate of the signal is 96 Mbps or less for CI+). However, it may be determined based on whether or not the bit rate is in the range of specifications of cards other than DVB-CI and CI+.

Furthermore, in this exemplary embodiment, cards to which television receiver 1100 is compatible with are two types, but a television receiver compatible with a plurality of arbitrary types may be employed.

In this exemplary embodiment, cards to which television receiver 1100 compatible with are cards compatible with DVB-CI and CI+, but may be a module card compatible with the other specifications. In this case, the same operation is carried out based on whether the bit rate is in the range of the specifications of the module card (the bit rate of a signal is a predetermined value or less) or out of the range (the bit rate of a signal is more than a predetermined value).

In this exemplary embodiment, whether the specification such as DVB-CI to which television receiver 1100 is compatible with is within the range or out of the range is determined based on the bit rate of a signal, but it may be determined based on the other items.

In this exemplary embodiment, the control to CI unit 1140 is determined based on whether or not the bit rate is in the range of the specifications of DVB-CI or CI+ (the bit rate of the signal is 58 Mbps or less for DVB-CI, and the bit rate of the signal is 96 Mbps or less for CI+). However, it may be determined based on whether or not the bit rate is in the range of specifications of arbitrary scrambled broadcast (that is to say, the bit rate of a signal is a predetermined value or less in a specific broadcast system).

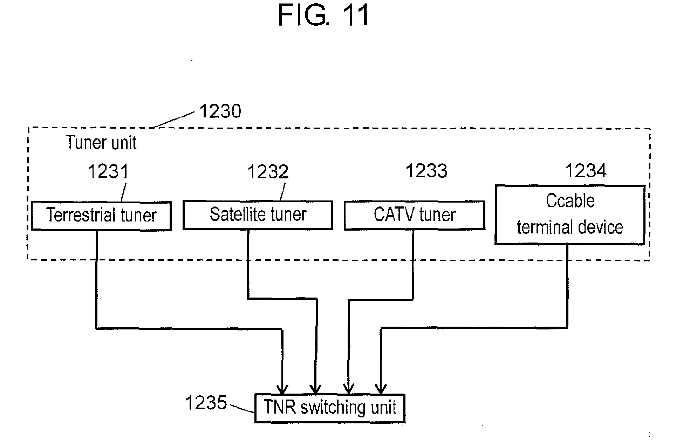

In this exemplary embodiment, tuner unit 1130 includes terrestrial tuner 1131 and satellite tuner 1132. However, in this exemplary embodiment, the tuner is not limited to these tuners. As shown in Fig. 11, tuner unit 1230 may include at least one of CATV tuner 1233 which receives CATV digital broadcast and optical cable terminal receiving device 1234 which receives digital broadcast with an optical cable in addition to terrestrial tuner 1231 which receives terrestrial digital broadcast and satellite tuner 1232 which receives satellite digital broadcast. Fig. 11 is a block diagram showing a configuration of tuner unit 1230 and tuner switching unit (which is referred to as a "TNR switching unit" in this drawing) 1235 of another example of a television receiver in accordance with the second exemplary embodiment of the present invention. As shown in Fig. 11, output from each tuner included in tuner unit 1230 is input into tuner switching unit (which is referred to as a "TNR switching unit" in this drawing) 1235. Note here that the other configurations of the television receiver of another example, which is not shown in Fig. 11, may be equal to those in Fig. 7 and so the description thereof is omitted.

Therefore, the television receiver of another example in this exemplary embodiment includes tuner unit 1230 which receives digital broadcast, tuner switching unit 1133 for switching a signal output by tuner unit 1230, CI unit 1140 that is an interface of CI card 1200, decoder unit 1150 for decrypting a signal of the received digital broadcast and outputting pictures, CI switching unit 1141 for switching between outputting a signal output by tuner unit 1230 to CI unit 1140 and outputting the signal to decoder unit 1150, and CPU 1120 as a control unit for controlling tuner unit 1230, tuner switching unit 1133 and CI switching unit 1141.

When a channel of CATV tuner 1233 or optical cable terminal receiving device 1234 is tuned, CPU 1120 controls CI switching unit 1141 so that a signal output by CATV tuner 1233 or optical cable terminal receiving device 1234 is input into decoder unit 1150. Thereafter, CPU 1120 confirms whether or not the signal output by CATV tuner 1233 or optical cable terminal receiving device 1234 is within the range of the specifications of DVB-CI. As a result, when the signal is in the range of the specifications of DVB-CI, CPU 1120 controls CI switching unit 1141 so that a signal input from tuner switching unit 1133 is input into CI unit 1140, and a signal output by CI unit 1140 is input into decoder unit 1150.

On the other hand, when the signal output by CATV tuner 1233 or optical cable terminal receiving device 1234 is out of the range of specifications of DVB-CI, CPU 1120 controls CI switching unit 1141 so that a signal input from tuner switching unit 1133 is input into decoder unit 1150.

Furthermore, when CI card 1200 inserted into CI unit 1140 is determined to be compatible with CI+, CPU 1120 confirms whether or not a signal output by CATV tuner 1233 or optical cable terminal receiving device 1234 is within the range of the specifications of CI+. As a result, when the signal is within the range of the specifications of CI+, CPU 1120 controls CI switching unit 1141 so that the signal input from tuner switching unit 1133 is input into CI unit 1140, and a signal output by CI unit 1140 is input into decoder unit 1150.

On the other hand, when the signal output by CATV tuner 1233 or optical cable terminal receiving device 1234 is out of the range of the specifications of CI+, CPU 1120 controls CI switching unit 1141 so that the signal input from tuner switching unit 1133 is input into decoder unit 1150.

In this way, with the digital receiver of another example of this exemplary embodiment, the present invention can be applied to not only terrestrial digital broadcast or satellite digital broadcast to but also digital broadcast by CATV or an optical cable.

In this exemplary embodiment, description is given mainly based on the assumption that a tuner unit receives digital broadcast. However, a television receiver may include a tuner unit or a video audio signal processing unit capable of receiving a conventional analog broadcast. Thus, not only digital broadcast but also conventional analog broadcast can be viewed and listened to.

### INDUSTRIAL APPLICABILITY

A digital receiver compatible with a plurality of specifications of scrambled broadcast of the present invention can display pictures with excellent picture quality without generating block noise even when it receives a signal out of the range of the specifications of scrambled broadcast, for example, specifications of DVB-CI and CI+ (a bit rate of a signal is 58 Mbps or less for DVB-CI, and a bit rate of a signal is 96 Mbps or less for CI+), and therefore it is useful as a television receiver, and the like.

### REFERENCE MARKS IN THE DRAWINGS

- 100: television receiver
- 110: light-receiving unit
- 120: CPU
- 121: memory unit
- 130: tuner unit
- 131: terrestrial tuner
- 132: satellite tuner
- 133: tuner switching unit
- 140: CI unit
- 141: CI switching unit
- 150: decoder unit
- 160: display unit
- 170: remote control signal
- 200: CI card
- 1100: television receiver
- 1110: light-receiving unit
- 1120: CPU
- 1121: memory unit
- 1130: tuner unit
- 1131: terrestrial tuner
- 1132: satellite tuner
- 1133: tuner switching unit
- 1140: CI unit
- 1141: CI switching unit
- 1150: decoder unit
- 1160: display unit
- 1170: remote control signal
- 1200: CI card
- 1230: tuner unit
- 1231: terrestrial tuner
- 1232: satellite tuner
- 1233: CATV tuner
- 1234: optical cable terminal receiving device

## Claims

1. A television receiver comprising:
a tuner unit including a plurality of tuners which receive digital broadcast;
a tuner switching unit for switching a signal output by the tuner unit;
a CI (Common Interface) unit that is an interface of a CI card;
a decoder unit for decrypting a signal of the received digital broadcast and outputting a picture;
a CI switching unit for switching between outputting a signal output by the tuner switching unit to the CI unit and outputting the signal to the decoder unit; and
a control unit for controlling the tuner unit, the tuner switching unit and the CI switching unit,
wherein the control unit confirms whether or not the signal output by the tuner unit is within a range of specifications of DVB-CI (Digital Video Broadcasting-Common Interface), and
when the signal is within the range of the specifications of DVB-CI,
the control unit controls the CI switching unit so that the signal input from the tuner switching unit is input into the CI unit, and a signal output by the CI unit is input into the decoder unit, and
when the signal is out of the range of the specifications of DVB-CI,
the control unit controls the CI switching unit so that the signal input from the tuner switching unit is input into the decoder unit.

2. The television receiver according to claim 1,
wherein when the CI card that has been inserted into the CI unit is determined to be compatible with CI+ (Common Interface Plus), the control unit confirms whether or not a signal output by the tuner unit is within a range of specifications of CI+, and
when the signal is within the range of the specifications of CI+,
the control unit controls the CI switching unit so that the signal input from the tuner switching unit is input into the CI unit, and a signal output by the CI unit is input into the decoder unit, and
when the signal is out of the range of the specifications of CI+,
the control unit controls the CI switching unit so that the signal input from the tuner switching unit is input into the decoder unit.

3. The television receiver according to claim 2,
wherein the tuner unit includes a terrestrial tuner which receives terrestrial digital broadcast, and a satellite tuner which receives satellite digital broadcast.

4. The television receiver according to claim 3,
wherein when a channel of the satellite tuner is tuned, the control unit controls the CI switching unit so that a signal output by the satellite tuner is input into the decoder unit, and then confirms whether or not the signal output by the satellite tuner is within the range of the specifications of DVB-CI,
when the signal is within the range of the specifications of DVB-CI,
the control unit controls the CI switching unit so that the signal input from the tuner switching unit is input into the CI unit, and a signal output by the CI unit is input into the decoder unit, and
when the signal is out of the range of the specifications of DVB-CI,
the control unit controls the CI switching unit so that the signal input from the tuner switching unit is input into the decoder unit.

5. The television receiver according to claim 3,
wherein the control unit controls the CI switching unit based on a signal of an external input so as to select any of followings:
controlling the CI switching unit so that the signal input from tuner switching unit is output to the CI unit, and a signal input from the CI unit is output to the decoder unit, and
controlling the CI switching unit so that the signal input from the CI switching unit is output to the decoder unit.

6. The television receiver according to claim 3,
further comprising at least one of:
a CATV tuner which receives CATV digital broadcast; and
an optical cable terminal receiving device which receives digital broadcast with an optical cable.

7. The television receiver according to claim 6,
wherein when a channel of the CATV tuner or the optical cable terminal receiving device is tuned, the control unit controls the CI switching unit so that a signal output by the CATV tuner or the optical cable terminal receiving device is input into the decoder unit, then confirms whether or not the signal output by the CATV tuner or the optical cable terminal receiving device is within the range of the specifications of DVB-CI, and
when the signal is within the range of the specifications of DVB-CI,
the control unit controls the CI switching unit so that the signal input from the tuner switching unit is input into the CI unit, and a signal output by the CI unit is input into the decoder unit, and
when the signal is out of the range of the specifications of DVB-CI,
the control unit controls the CI switching unit so that the signal input from the tuner switching unit is input into the decoder unit.

8. The television receiver according to claim 6,
wherein when the CI card that has been inserted into the CI unit is determined to be compatible with CI+, the control unit confirms whether or not a signal output by the CATV tuner or the optical cable terminal receiving device is within the range of the specifications of CI+, and
when the signal is within the range of the specifications of CI+,
the control unit controls the CI switching unit so that the signal input from the tuner switching unit is input into the CI unit, and a signal output by the CI unit is input into the decoder unit, and
when the signal is out of the range of the specifications of CI+,
the control unit controls the CI switching unit so that the signal input from the tuner switching unit is input into the decoder unit.

9. A television receiver comprising:
a tuner unit including a plurality of tuners which receives digital broadcast;
a tuner switching unit for switching a signal output by the tuner unit;
a module unit that is an interface of a module card;
a decoder unit for decrypting a signal of the received digital broadcast and outputting a picture;
a module switching unit for switching between outputting a signal output by the tuner switching unit to the module unit and outputting the signal to the decoder unit; and
a control unit for controlling the tuner unit, the tuner switching unit and the module switching unit,
wherein the control unit confirms whether or not the signal output by the tuner unit is within a range of specifications of the module card, and
when the signal is within the range of the specifications of module card,
the control unit controls the module switching unit so that the signal input from the tuner switching unit is input into the module unit, and a signal output by the module unit is input into the decoder unit, and
when the signal is out of the range of the specifications of the module card,
the control unit controls the module switching unit so that the signal input from the tuner switching unit is input into the decoder unit.
